# EUROPEAN PATENT SPECIFICATION

(11) **EP 0 565 171 B1**
(45) Date of publication and mention of the grant of the patent: **05.03.1997**
(21) Application number: 93200921.0
(22) Date of filing: 31.03.1993
(51) Int. Cl.: H04N 5/32, H05G 1/64

(54) **X-ray examination apparatus having means for correcting scattered-radiation effects in an x-ray image**
Vorrichtung zur Röntgenuntersuchung mit Korrektur der Streustrahlungseffekte in einem Röntgenbild
Appareil d'examen par rayons X avec correction d'effets de dispersion de rayonnement dans une image à rayons X

(30) Priority: 08.04.1992 EP 92200998
(43) Date of publication of application: 13.10.1993
(73) Proprietor: Philips Electronics N.V., 5621 BA Eindhoven (NL)
(72) Inventor: Kemner, Rudolf, NL-5656 AA Eindhoven (NL)
(74) Representative: Schouten, Marcus Maria

(56) References cited:
- EP-A- 0 093 649
- EP-A- 0 098 633
- EP-A- 0 157 417
- EP-A- 0 358 268
- US-A- 4 644 575

## Description

The invention relates to an x-ray examination apparatus comprising an x-ray source for emitting an x-ray beam to form an x-ray image of an object, an x-ray detector to convert the x-ray image into a video signal, a scattered-radiation grid comprising x-ray absorbing portions and x-ray transparent portions which scattered-radiation grid is positioned between the x-ray source and the x-ray detector, correction means for correcting scattered-radiation effects in the x-ray image, which correction means include a signalling circuit to generate selection signals, which selection signals distinguish portions of said video signal corresponding to positions in the x-ray image behind x-ray transparent and x-ray absorbing portions of the scattered-radiation grid, respectively, a signal separation means which is controlled by said selection signals to extract from the video signal a first separated video signal corresponding to x-ray intensities behind x-ray transparent portions of the scattered-radiation grid, a second separated video signal corresponding to x-ray intensities behind x-ray absorbing portions of the scattered-radiation grid, and a subtractor for subtracting said second separated video signal from said first separated video signal.

The invention also relates to a method of processing an x-ray image of an object comprising the steps of irradiating the object with x-rays from an x-ray source to form the x-ray image on an x-ray detector, passing the x-ray through a scattered-radiation grid which comprises x-ray absorbing portions and x-ray transparent portions being positioned between the x-ray source and the x-ray detector, converting the x-ray image into a video signal by the x-ray detector correcting scattered-radiation effects in the x-ray image, which correcting includes generating selection signals, which selection signals distinguish portions of said video signal corresponding to positions in the x-ray image behind x-ray transparent and x-ray absorbing portions of the scattered-radiation grid, respectively, extracting from the video signal under control by said selection signals a first separated video signal corresponding to x-ray intensities behind x-ray transparent portions of the scattered-radiation grid, a second separated video signal corresponding to x-ray intensities behind x-ray absorbing portions of the scattered-radiation grid, and subtracting said second separated video signal from said first separated video signal.

An x-ray examination apparatus and a method of said kind are known from the European patent application **EP-A-0 093 649**. The scattered-radiation grid of the known apparatus is in fact a mask comprising a particular number of wholly x-ray absorbing areas, which mask is placed in the x-ray beam between the x-ray source and the object. The known apparatus forms a separate reference image of the mask in the absence of the object before an x-ray image of the object is made with the mask in the x-ray beam. With the reference image positions in the x-ray image of the object corresponding to wholly absorbing areas of the mask are determined to extract a scattered-radiation component from the x-ray image of the object. In the European patent application **EP-A-0 358 268** an x-ray examination apparatus is disclosed that comprises means for correcting scattered-radiation effects in an x-ray image, which requires weighting factors that are co-determined by imaging parameters of the x-ray examination apparatus.

An object of the invention is to provide an x-ray examination apparatus comprising means for real-time correction of scattered-radiation effects.

To achieve this object, an x-ray examination apparatus according to the invention is characterized in that the signalling circuit comprises a high-pass filter to extract a high-frequency component from the video signal to derive the selection signals from said high-frequency component.

An other object of the invention is to provide a method for processing an x-ray image comprising real-time correction of scattered-radiation effects, which is achieved by a method according to the invention characterized in that a high-frequency component is extracted from the video signal and the selection signals are derived from the high-frequency component.

Precise information on which parts of the video signal correspond to portions of the x-ray image behind the absorbing parts and portions of the x-ray image behind the transparent parts of the scattered-radiation grid is contained in the video signal itself. The selection signals are extracted from the video signal itself so that the correction of the video signal is performed in real time.

A spatial intensity distribution of an x-ray beam attenuated by an object contains a component which does not contribute to imaging *inter alia* because in addition to attenuation of the x-ray beam in the propagation direction also scattering from electrons in the attenuating object occurs. The attenuated x-ray intensity therefore consists of an intensity of primary radiation, corresponding to a decrease of the intensity of the radiation of an x-ray beam in the propagation direction and of an intensity of scattered-radiation, corresponding to the x-rays scattered in the object. Rays of primary x-radiation have propagation directions of rays emitted by the x-ray source. Rays of scattered x-radiation have random directions of propagation.

The scattered-radiation grid comprises a laminated structure so as to avoid to some extent scattered-radiation, having random directions of propagation, to pass the scattered-radiation grid. The laminations consist of x-ray absorbing material and x-ray-transparent channels being formed in between the absorbing laminations are in a direction of a beam path of x-radiation generated by the x-ray source. Immediately behind the absorbing parts of the scattered-radiation grid x-radiation intensity is predominantly due to scattered-radiation, whereas immediately behind transparent parts of the scattered-radiation grid x-ray intensity is due to both scattered-radiation and primary radiation.

Because spatial variations of scattered-radiation are predominantly varying slowly, scattered-radiation intensity immediately behind an absorbing part of the scattered-radiation grid and scattered intensity immediately behind a transparent part of the scattered-radiation grid, said absorbing part and transparent part being close to each other, are substantially equal.

Because the scattered-radiation grid consists of alternate x-ray absorbing laminations and x-ray transparent channels, an image generated by an imaging system comprising such a scattered-radiation grid contains a rapidly spatially varying pattern. Image information relating to an object examined by x-radiation has spatial variations which vary more slowly than the pattern associated with the scattered-radiation grid. Consequently, extraction of the high-frequency part of the video signal generated by the x-ray examination apparatus provides information concerning positions of absorbing parts of the scattered-radiation grid. From said information concerning the scattered-radiation grid, signalling information is generated for discriminating between radiation detected behind a transparent part or behind an absorbing part of the scattered-radiation grid.

From the video signal, generated by the x-ray detector there is obtained, by using said signalling information, a first separated video signal pertaining to intensities of scattered x-radiation and a second separated video signal corresponding to sums of intensities of scattered-radiation and of primary x-radiation. By subtraction of the first separated video signal from the second separated video signal, there is obtained a video signal for an x-ray image which is corrected for perturbations due to scattered-radiation.

The high-pass filter separates a high-frequency part from the video signal associated with the total intensities of primary and scattered-radiation at positions behind the scattered-radiation grid. Said high-frequency part pertains to the structure of the scattered-radiation grid. The scattered-radiation grid is commonly referred to as a 'Bucky grid'. Therefore the high-frequency part of the video signal generated by the x-ray detector will be referred to hereinafter as a 'Bucky-signal'. From a Bucky-signal a first series of voltage pulses is constructed, each of the pulses of the first series being associated with a position behind an absorbing part of the scattered-radiation grid. Correspondingly, a second series of voltage pulses is constructed from the Bucky-signal, each of the pulses of said second series being associated with a position behind a transparent part of the scattered-radiation grid. Thus, the pulse series derived from a Bucky-signal are employed as selection signals for separating the video signal generated by the x-ray source. Because the first series of voltage pulses is an approximately periodic function of time, the second series of voltage pulses can be obtained by shifting the first series of voltage pulses in time over half the period of the first series of voltage pulses. In other words; because of periodicity, the first series of voltage pulses has a phase, the second series of voltage series is produced by shifting the phase of the first series of voltage pulses over 180°.

A further preferred embodiment of a device in accordance with the invention is characterised in that the video signal separating means comprises synchronous detection means.

The video signal generated by the x-ray detector comprises of signal amplitudes, e.g. voltages, being in correspondence with intensity values in the x-ray image. The video signal generated by the x-ray detector, together with the first and second series of voltage pulses are fed into a synchronous detection means. Signal amplitudes of the video signal generated by the x-ray detector coinciding at the synchronous detection means with voltage pulses of the first pulse series are combined into a first separated video signal. Similarly, a second separated video signal is formed by signal amplitudes of the video signal generated by the x-ray detector coinciding at the synchronous detection means with voltage pulses of the second pulse series. Thus, a first separated video signal is formed having signal amplitudes in correspondence with primary radiation intensities containing image information, together with scattered-radiation intensities. A second separated video signal is formed having signal amplitudes substantially in correspondence with scattered-radiation intensities only. Hence, by subtraction of the second separated video signal from the first separated video signal there is obtained a video signal comprising signal amplitudes in correspondence with x-ray image intensities and which is corrected for perturbations due to scattered-radiation.

A further preferred embodiment of a device in accordance with the invention is characterised in that the synchronous detection means comprises a gate circuit.

The operation of a gate circuit consists of transmitting some signal provided that another signal is present. Therefore, a gate circuit is suited for use as the synchronous detection means.

A further preferred embodiment of a device in accordance with the invention is characterised in that the device also comprises a delay means for delaying the video signal generated by the x-ray detector prior to supplying said video signal to the video signal separation means.

Electronic performance of operations for generating pulse series for discriminating between signal amplitudes containing only scattered-radiation intensities and signal amplitudes containing both image intensities and scattered-radiation intensities, as discussed above will consume some amount of time. The video signal generated by the x-ray detector is appropriately delayed by the delay means in a device according to the invention, so that the video signal generated by the x-ray detector is fed into the synchronous detection means simultaneously with relevant voltage pulses of said first and second series.

A still further preferred embodiment of a device in accordance with the invention is characterised in that the device also comprises a bypass circuit, and further signal generating means for activating said bypass circuit in dependence of the presence of selection signals.

In a number of circumstances of operating the device, the Bucky-signal is not available. This may occur e.g. when an x-ray diaphragm positioned in the x-ray beam path is closed. Furthermore, the Bucky-signal is absent in parts of the x-ray image that pertain to extremely strong absorption in the object which is examined. Whenever there is no Bucky-signal available, it is evident that the synchronous detection means cannot provide a video signal for an x-ray image corrected for perturbations due to scattered-radiation. The absence of a Bucky-signal is detected by the signalling circuit means and then a signal is generated for activating a bypass circuit. When the bypass circuit is activated, then the video signal generated by the x-ray detector is employed directly as an output video signal of the device.

These and other aspects of the invention will become apparent from and elucidated with reference to the embodiments described hereinafter and with reference to the accompanying drawing.

Figure 1 shows primary x-radiation and scattered x-radiation passing a scattered-radiation grid.

Figure 2 shows a block scheme of a preferred embodiment of an x-ray examination apparatus according to the invention.

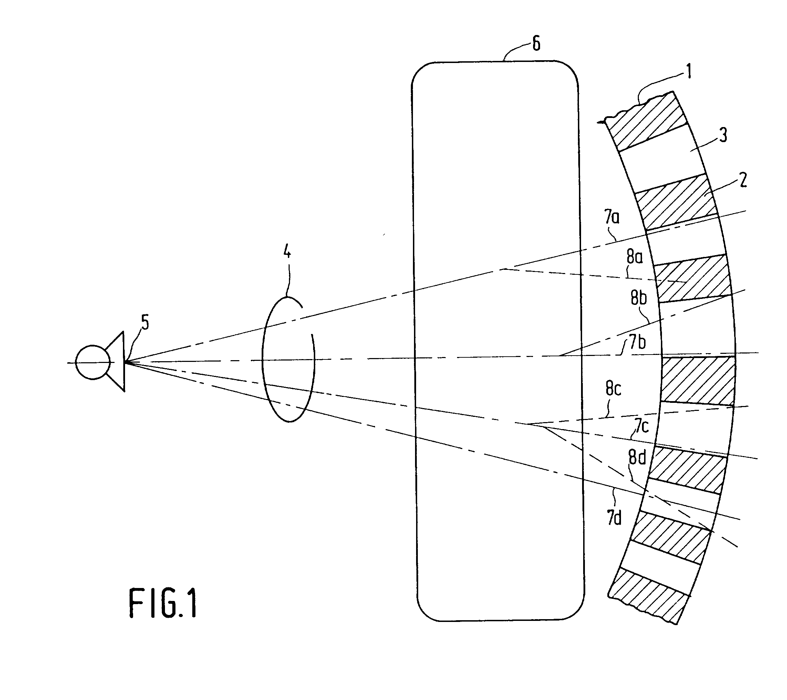

Figure 1 shows primary x-radiation and scattered x-radiation passing a scattered-radiation grid 1, comprising x-ray absorbing parts formed by laminations 2. In between the laminations there are x-ray transparent parts formed by channels 3. Intensities of x-rays 4 that are emitted by the x-ray source 5 can be decreased by a x-ray absorbing object 6, or the x-rays can be scattered from e.g. electrons, within the object 6. After having passed through the object 6, the propagation direction of the attenuated primary x-radiation remains the same as the direction in which they were emitted by the x-ray source. The directions of longitudinal axes of respective channels in the scattered-radiation grid are arranged such that attenuated primary rays 7a-d pass through respective channels along directions of longitudinal axes of said channels. When x-rays are incident on the object 6, they can be scattered within the object and scattered x-rays 8a-d have propagation directions that are different from the propagation directions of incident x-radiation. Scattered x-rays, such as e.g. an x-ray marked by reference numeral 8a can be blocked by the absorbing laminations, or scattered rays, such as e.g. x-rays marked by reference numerals 8b-d may pass through the transparent channels. A scattered x-ray passing through a transparent channel in the scattered-radiation grid may or may not have a propagation direction to some extent along the longitudinal axis of the relevant channel. Therefore, the scattered x-rays will appear in positions behind x-ray absorbing parts of the scattered-radiation grid as well as in positions behind x-ray transparent parts of the scattered-radiation grid. On the other hand, primary radiation will only appear behind the x-ray transparent parts of the scattered-radiation grid.

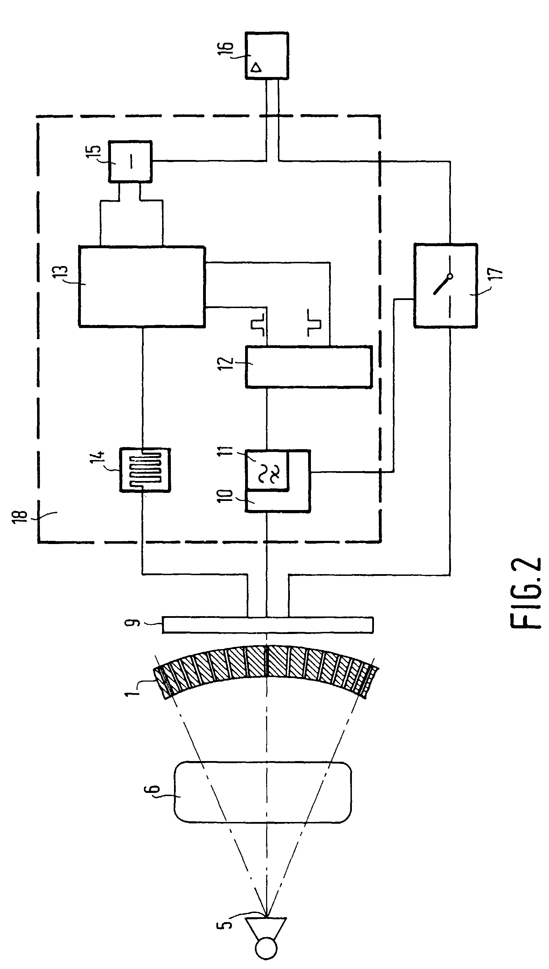

Figure 2 shows a block diagram of a preferred embodiment of an x-ray examination apparatus in accordance with the invention. The x-ray source 5 is provided for generating x-radiation for irradiating an object 6, notably a patient, for x-ray examination. The x-radiation is attenuated and scattered by the object. The attenuated primary x-radiation passes through the scattered-radiation grid 1. The scattered-radiation is partially absorbed by the absorbing laminations and is also partially transmitted through the transparent channels of the scattered-radiation grid. An x-ray detector 9 detects both attenuated radiation and scattered-radiation which have passed the scattered-radiation grid. A high-frequency component of an output video signal of the x-ray detector corresponds to rapid intensity variations of the x-ray intensity that is due to the periodic structure of the scattered-radiation grid. The high-frequency component will be referred to hereinafter as a 'Bucky-signal'. The Bucky-signal is obtained from the video signal provided by the x-ray detector by way of a high-pass filter 11. The high-pass filter 11 is part of a signal generating means 10. The Bucky-signal is fed into a double-pulse generator 12. The double-pulse generator produces two periodic series of signal pulses, each of the pulse series having a substantially same period. The two series of signal pulses are mutually shifted over half a period and serve as selection signals produced by the signalling circuit constituted by the high-pass filter 11 and the double-pulse generator 12. The two signal pulse series are subsequently fed into a video signal separation means formed by synchronous detection means 13. For example, the synchronous detection means comprises a gate circuit. The video signal generated by the x-ray detector is supplied to a delay means 14. Thereby an appropriately delayed video signal is produced that itself is fed into the synchronous detection means, simultaneously with the signal pulse series provided by the double-pulse generator 12. From the delayed video signal supplied by the delay means 14, the synchronous detection means generates two separated video signals. A first separated video signal produced by the synchronous detection means contains signal amplitudes corresponding to intensities of scattered x-radiation, appearing behind the laminations 2, a second separated video signal produced by the synchronous detection means contains signal amplitudes corresponding to sums of intensities of scattered x-radiation and primary radiation, appearing behind the channels 3. The two separated video signals produced by the synchronous detection means are subtracted from one another by a subtraction means 15. Thus, a video signal comprising signal amplitudes of x-ray intensities for an x-ray image, which is corrected for perturbations due to scattered-radiation is supplied by the subtraction means 15. In order to subtract video signals appropriately, e.g. subtraction involves delaying the second separated video signal relatively to the first separated video signal, so that signal amplitudes corresponding to intensities of scattered radiation are subtracted from signal amplitudes corresponding to sums of intensities of scattered and primary radiation, such that said respective intensities pertain to portions behind neighbouring absorbing lamination and transparent channels of the scattered-radiation grid. Or, a further low-pass filter may be employed to isolate a low-frequency component of the first separated video signal and subtracting that low-frequency component from the second separated video signal. Finally, the video signal provided by the subtraction means is fed into a output buffer circuit 16. Consequently, means 18 for correcting scattered-radiation effects in an x-ray image comprises a combination, as described hereinbefore, of the synchronous detection means 13, the double pulse generator 12, the high-pass filter 11, the signal generating means 10, the delay means 14 and the subtraction means 15.

When there is no Bucky-signal available, its absence is detected by way of the signal generating means 10 and a signal is generated by the signal generating means 10 for activating a bypass circuit 17. When the bypass circuit is activated, then the video signal generated by the x-ray detector 9 is supplied directly to the output buffer circuit 16.

## Claims

1. An x-ray examination apparatus comprising
- an x-ray source (5) to emit an x-ray beam to form an x-ray image of an object (6),
- an x-ray detector (9) to convert the x-ray image into a video signal,
- a scattered-radiation grid (1) comprising x-ray absorbing portions (2) and x-ray transparent portions (3), which scattered-radiation grid is positioned between the x-ray source (5) and the x-ray detector (9),
- correction means (18) to correct scattered-radiation effects in the x-ray image, which correction means include
- a signalling circuit (10,11,12) to generate selection signals, which selection signals distinguish portions of said video signal corresponding to positions in the x-ray image behind x-ray transparent and x-ray absorbing portions of the scattered-radiation grid, respectively,
- a signal separation means (13) which is controlled by said selection signals to extract from said video signal
- a first separated video signal corresponding to x-ray intensities behind x-ray transparent portions of the scattered-radiation grid,
- a second separated video signal corresponding to x-ray intensities behind x-ray absorbing portions of the scattered-radiation grid,
- and a subtractor (15) to subtract said second separated video signal from said first separated video signal, characterized in that
- the signalling circuit (10,11,12) comprises a high-pass filter (11) to extract a high-frequency component from said video signal to derive the selection signals from said high-frequency component.

2. An x-ray examination apparatus as claimed in Claim 1, characterized in that the video signal separating means (13) comprises synchronous detection means (13).

3. An x-ray examination apparatus as claimed in Claim 1 characterized in that the signal separating means (13) comprises a gate circuit (13).

4. An x-ray examination apparatus as claimed in any one of the preceding Claims, characterized in that the correction means comprises a delay means (14) for delaying the video signal prior to supplying said video signal to the video signal separation means (13).

5. An x-ray examination apparatus as claimed in any one of the preceding claims, characterized in that the apparatus comprises a bypass circuit (17) and further signal generating means (10) for activating said bypass circuit in dependence of said selection signals being present.

6. A method of processing an x-ray image of an object comprising the steps of
- irradiating the object with x-rays from an x-ray source (5) to form the x-ray image on an x-ray detector (9),
- passing the x-rays through a scattered-radiation grid (1) which comprises x-ray absorbing portions (2) and x-ray transparent portions (3), being positioned between the x-ray source (5) and the x-ray detector (9),
- converting the x-ray image into a video signal by the x-ray detector
- correcting scattered-radiation effects in the x-ray image, which correcting includes
- generating selection signals, which selection signals distinguish portions of said video signal corresponding to positions in the x-ray image behind x-ray transparent and x-ray absorbing portions of the scattered-radiation grid, respectively,
- extracting from said video signal under control of said selection signals
- a first separated video signal corresponding to x-ray intensities behind x-ray transparent portions of the scattered-radiation grid,
- a second separated video signal corresponding to x-ray intensities behind x-ray absorbing portions of the scattered-radiation grid,
- and subtracting said second separated video signal from said first separated video signal, characterized in that
- a high-frequency component is extracted from said video signal and the selection signals are derived from the high-frequency component.

## Patentansprüche

1. Röntgenuntersuchungsanordnung mit einer Röntgenquelle (5) zum Ausgeben eines Röntgenstramungsbündels zum Erzeugen eines Röntgenbildes eines Objekts (6), einem Röntgendetektor (9) zum Umsetzen des Röntgenbildes in ein Videosignal, einem Streustrahlungsgitter (1) mit Röntgenabsorptionsanteilen (2) und Röntgendurchlaßanteilen (3), wobei das Streustrahlungsgitter sich zwischen der Röntgenquelle (5) und dem Röntgendetektor (9) befindet, einem Korrekturmittel (18) zum Korrigieren von Streustrahlungseffekten im Röntgenbild, und dieses Korrekturmittel enthält eine Signalisierschaltung (10, 11, 12) zum Erzeugen von Wählsignalen, die Anteile des Videosignals entsprechend Positionen im Röntgenbild hinter Röntgendurchlaß- und Röntgenabsorptionsanteilen des Streustrahlungsgitters unterscheiden, bzw. ein Signaltrennmittel (13), das von den Wählsignalen zum Ableiten des Videosignals gesteuert wird, ein erstes getrenntes Videosignal entsprechend Röntgenintensitäten hinter Röntgendurchlaßanteilen des Streustrahlungsgitters, ein zweites getrenntes Videosignal entsprechend Röntgenintensitäten hinter Röntgenabsorptionsanteilen des Streustrahlungsgitters, und eine Subtrahierstufe (15) zum Subtrahieren des zweiten getrennten Videosignals vom ersten getrennten Videosignal,
dadurch gekennzeichnet, daß
die Signalisierschaltung (10, 11, 12) ein Hochpaßfilter (11) zum Ableiten einer Hochfrequenzkomponente aus dem Videosignal zum Ableiten der Wählsignale aus der Hochfrequenzkomponente enthält.

2. Röntgenuntersuchungsanordnung nach Anspruch 1, dadurch gekennzeichnet, daß das Videosignal Trennmittel (13) Synchrondetektormittel (13) enthält.

3. Röntgenuntersuchungsanordnung nach Anspruch 1, dadurch gekennzeichnet, daß das Signal Trennmittel (13) eine Gatterschaltung (13) enthält.

4. Röntgenuntersuchungsanordnung nach einem oder mehreren der vorangehenden Ansprüche, dadurch gekennzeichnet, daß das Korrekturmittel ein Verzögerungsmittel (14) zum Verzögern des Videosignals vor dem Zuführen des Videosignals an das Videosignaltrennmittel (13) enthält.

5. Röntgenuntersuchungsanordnung nach einem oder mehreren der vorangehenden Ansprüche, dadurch gekennzeichnet, daß die Anordnung eine Nebenschlußschaltung (17) und weitere Signalerzeugungsmittel (10) zum Aktivieren der Nebenschlußschaltung in Abhängigkeit der vorhandenen Wählsignale enthält.

6. Verfahren zum Bearbeiten eines Röntgenbildes eines Objekts mit folgenden Stufen:
- Anstrahlen des Objekts mit Röntgenstrahlen aus einer Röntgenquelle (5) zum Erzeugen des Röntgenbildes an einem Röntgendetektor (9),
- Durchlassen der Röntgenstrahlen durch ein Streustrahlungsgitter (1), das Röntgenabsorptionsanteile (2) und Röntgendurchlaßanteile (3) enthält, die sich zwischen der Röntgenquelle (5) und dem Röntgendetektor (9) befinden,
- Umsetzen des Röntgenbildes in ein Videosignal mit Hilfe des Röntgendetektors,
- Korrekturen der Streustramungseffekte im Röntgenbild, und diese Korrektur umfaßt,
- das Erzeugen von Wählsignalen, die Anteile des Videosignals entsprechend Positionen im Röntgenbild hinter Röntgendurchlaß- und Röntgenabsorptionsanteilen des Streustrahlungsgitters unterscheiden,
- das Ableiten des Videosignals unter der Steuerung der Wählsignale,
- ein erstes getrenntes Videosignal entsprechend Röntgenintensitäten hinter Röntgendurchlaßanteilen des Streustrahlungsgitters,
- ein zweites getrenntes Videosignal entsprechend Röntgenintensitäten hinter Röntgenabsorptionsanteilen des Streustrahlungsgitters,
- und das Subtrahieren des zweiten getrennten Videosignals vom ersten getrennten Videosignal, dadurch gekennzeichnet, daß
- eine Hochfrequenzkomponente vom Videosignal abgeleitet wird und die Wählsignale von der Hochfrequenzkomponente abgeleitet werden.

## Revendications

1. Appareil d'examen aux rayons X comprenant
- une source de rayons X (5) pour émettre un faisceau de rayons X afin de former une image de rayons X d'un objet (6);
- un détecteur de rayons X (9) pour convertir l'image de rayons X en un signal vidéo;
- une grille de rayonnement diffusé (1) comprenant des parties (2) absorbant les rayons X et des parties (3) transparentes aux rayons X, laquelle grille de rayonnement diffusé est interposée entre la source de rayons X (5) et le détecteur de rayons X (9);
- des moyens de correction (18) pour corriger les effets du rayonnement diffusé dans l'image de rayons X, lesquels moyens de correction comprennent
- un circuit de signalisation (10, 11, 12) pour générer des signaux de sélection, lesquels signaux de sélection distinguent des parties du signal vidéo correspondant à des endroits dans l'image de rayons X situés derrière les parties transparentes aux rayons X et les parties absorbant les rayons X de la grille de rayonnement diffusé, respectivement,
- un moyen de séparation de signal (13) qui est commandé par lesdits signaux de sélection pour extraire dudit signal vidéo
- un premier signal vidéo séparé correspondant aux intensités de rayons X derrière les parties transparentes aux rayons X de la grille de rayonnement diffusé,
- un deuxième signal vidéo séparé correspondant aux intensités de rayons X derrière les parties absorbant les rayons X de la grille de rayonnement diffusé,
- et un soustracteur (15) pour soustraire ledit deuxième signal vidéo séparé dudit premier signal vidéo séparé, caractérisé en ce que
- le circuit de signalisation (10, 11, 12) comprend un filtre passe-haut (11) pour extraire une composante à haute fréquence dudit signal vidéo afin de dériver les signaux de sélection de ladite composante à haute fréquence.

2. Appareil d'examen aux rayons X suivant la revendication 1, caractérisé en ce que le moyen de séparation de signal vidéo (13) comprend un moyen de détection synchrone (13).

3. Appareil d'examen aux rayons X suivant la revendication 1, caractérisé en ce que le moyen de séparation de signal (13) comprend un circuit-porte (13).

4. Appareil d'examen aux rayons X suivant l'une quelconque des revendications précédentes, caractérisé en ce que le moyen de correction comprend un moyen à retard (14) pour retarder le signal vidéo avant qu'il ne soit délivré au moyen de séparation de signal vidéo (13).

5. Appareil d'examen aux rayons X suivant l'une quelconque des revendications précédentes, caractérisé en ce que l'appareil comprend un circuit de dérivation (17) et d'autres moyens générateurs de signaux (10) pour activer ledit circuit de dérivation en fonction desdits signaux de sélection présents.

6. Procédé de traitement d'une image de rayons X d'un objet comprenant les étapes suivantes :
- irradier l'objet au moyen de rayons X en provenance d'une source de rayons X (5) pour former l'image de rayons X sur un détecteur de rayons X (9);
- faire passer les rayons X à travers une grille de rayonnement diffusé (1), qui comprend des parties (2) absorbant les rayons X et des parties (3) transparentes aux rayons X, étant interposée entre la source de rayons X (5) et le détecteur de rayons X (9);
- convertir l'image de rayons X en un signal vidéo par le détecteur de rayons X;
- corriger les effets du rayonnement diffusé dans l'image de rayons X, laquelle correction comprend
- la génération des signaux de sélection, qui distinguent les parties dudit signal vidéo correspondant aux endroits dans l'image de rayons X situés derrière les parties transparentes aux rayons X et les parties absorbant les rayons X de la grille de rayonnement diffusé, respectivement;
- l'extraction dudit signal vidéo, sous la commande desdits signaux de sélection,
- d'un premier signal vidéo séparé correspondant aux intensités de rayons X derrière les parties transparentes aux rayons X de la grille de rayonnement diffusé,
- d'un deuxième signal vidéo séparé correspondant aux intensités de rayons X derrière les parties absorbant les rayons X de la grille de rayonnement diffusé,
- et la soustraction dudit deuxième signal vidéo séparé à partir dudit premier signal vidéo séparé, caractérisé en ce que
- une composante à haute fréquence est extraite dudit signal vidéo et les signaux de sélection sont dérivés de la composante à haute fréquence.
